# EUROPEAN PATENT APPLICATION

(11) **EP 1 195 718 A2**
(43) Date of publication of application: **10.04.2002**
(21) Application number: 01122083.7
(22) Date of filing: 14.09.2001
(51) Int. Cl.: G06T 15/00

(54) **Parallel pipelined image rendering system**

(30) Priority: 04.10.2000 US 679248
(71) Applicant: TeraRecon, Inc., San Mateo, California 94403 (US)
(72) Inventor: Yeager, Mark O., West Groton, MA 01472 (US); Corell, Kenneth W., Lancaster, MA 01523 (US); Kerzner, Steven, Arlington, MA 02474 (US); Lauer, Hugh C., Concord, MA 01742 (US); Seiler, Larry D., Boylston, MA 01505 (US)
(74) Representative: Pfenning, Meinig & Partner

(57) **Abstract**

A rendering system for rendering graphic data includes a host processor generating data transfer and rendering commands, and a memory storing the data transfer and rendering commands in command queues. A command parser of the system concurrently parses and processes the data transfer and rendering commands of the command queues, and a synchronization mechanism is used to synchronize the concurrent parsing and processing the data transfer and rendering commands.

## Description

### Field of the Invention

The present invention is related to the field of computer graphics, and in particular to rendering graphic data in a parallel pipelined rendering system.

### Background of the Invention

Volume rendering is often used in computer graphics applications when three-dimensional data need to be visualized. The volume data can be scans of physical or medical objects, or atmospheric, geophysical, or other scientific models where visualization of the data facilitates an understanding of the underlying real-world structures represented by the data.

With volume rendering, the internal structure, as well as the external surface features of physical objects and models are visualized. Voxels are usually the fundamental data items used in volume rendering. A voxel is associated with a particular three-dimensional portion of the object or model. The coordinates (*x*, *y*, *z*) of each voxel map the voxel to a position within the represented object or model.

A voxel represents one or more values related to a particular location in the object or model. In a prior art volume rendering system, the values represented by a voxel can be a specific one of a number of different parameters, such as, density, tissue type, elasticity, or velocity. During rendering, the voxels are converted to color and opacity (RGBα) values, according to their intensity values, which can be projected onto a two-dimensional image plane for viewing.

One frequently used technique during rendering is ray-casting. There, a set of imaginary rays are cast through the array of voxels. The rays originate from some view point or image plane. The intensity values of the voxels are sampled at points along the rays, and various techniques are known to convert the sampled values to pixel values.

U.S. Patent Application Sn. 09/315,742, *"Volume rendering integrated circuit,"* filed on May 20, 1999 by Burgess et al., is incorporated herein by reference. There, a simple prior art volume rendering system is described. The rendering system includes a host processor connected to a volume graphics board (VGB) by an interconnect bus. The host processor can be any sort of personal computer or workstation including the bus. The host includes a host or main memory. The host memory can be any combination of internal and external storage available to the processor, such as a main memory, a cache memory, and a disk memory.

The VGB includes a voxel memory and a pixel memory connected to a Volume Rendering Chip (VRC). The VRC includes all logic necessary for performing real-time interactive volume rendering operations. The VRC includes four interconnected rendering pipelines. In effect the VGB provides a rendering engine or "graphics accelerator" for the host.

During operation, application software executing in the host transfers the volume data to the VGB for rendering. In particular, the voxel data are transferred from the host memory over the bus to the voxel memory. The application also stores other data, such as classification tables in the voxel memory. The application also loads rendering registers accessible by the pipelines. These registers specify how the rendering is to be performed. After all data have been loaded, the application generates a command to initiate the rendering operation. The pipelines execute the rendering command. When the rendering operation is complete, the output image is moved from the pixel memory to the host or to a 3D graphics card for display on an output device. In the Burgess system, the major operations take place sequentially, that is, writer voxel data from the host to the VGB, render in the VRC, and then write pixel data from the VGB back to the host.

However, for more complex rendering operations, it may be desired to overlap memory transfers with rendering operations, or to set up one rendering operation while a previous rendering operation is still in progress. Moreover, for efficiency reasons, it may be desirable to progress from one rendering operation to the next, without interrupt and without intervention by the application or other software executing in the host. Likewise, it may be desirable to progress from completing a rendering operation to initiating a data transfer without interruption or intervention by software.

For example, while the pipelines are rendering a current volume, the image resulting from rendering a previous volume could be transferred back to the host, and a next volume to be rendered could be loaded. In this scenario, the rendering operation for the next volume must not begin until the volume is completely loaded, and the data transfer of the image must not begin until the rendering operation that produced it has completed. This scenario quickly gets even more complicated when the movement of data includes embedded polygon geometry, because this increases the number of different data sources that must be loaded before rendering begins.

Therefore, it is desired to provide an efficient means for controlling the rendering system so that activities such as rendering operations and data transfers of long duration can be overlapped in time, so that separate activities can by synchronized with each other without intervention by host software, and so that the host software can determine the state of rendering activities and synchronize with activities in progress.

### Summary of the Invention

The invention provides a rendering system for rendering graphic data that includes a host processor generating data transfer and rendering commands. The system also includes a memory storing the data transfer and rendering commands in a plurality of command queues, and a command parser concurrently parsing and processing the data transfer and rendering commands of the plurality of command queues. A synchronization mechanism is used to synchronize the concurrent parsing and processing the data transfer and rendering commands.

### Brief Description of the Drawings

Figure 1 is a block diagram of a rendering engine that uses command queues according to the invention;
Figure 2 is a block diagram of bus logic including command queue logic;
Figure 3 is a block diagram of a preferred embodiment of implementing command queues according to the invention;
Figure 4 is graph of command queue states and state transitions;
Figures 5 is a table of queue control registers;
Figure 6 is a table of queue status registers;
Figure 7 is a table of a queue command header; and
Figure 8 is a table of command queue registers used for synchronization.

### Detailed Description of the Prefered Embodiment

### Pipeline Organization

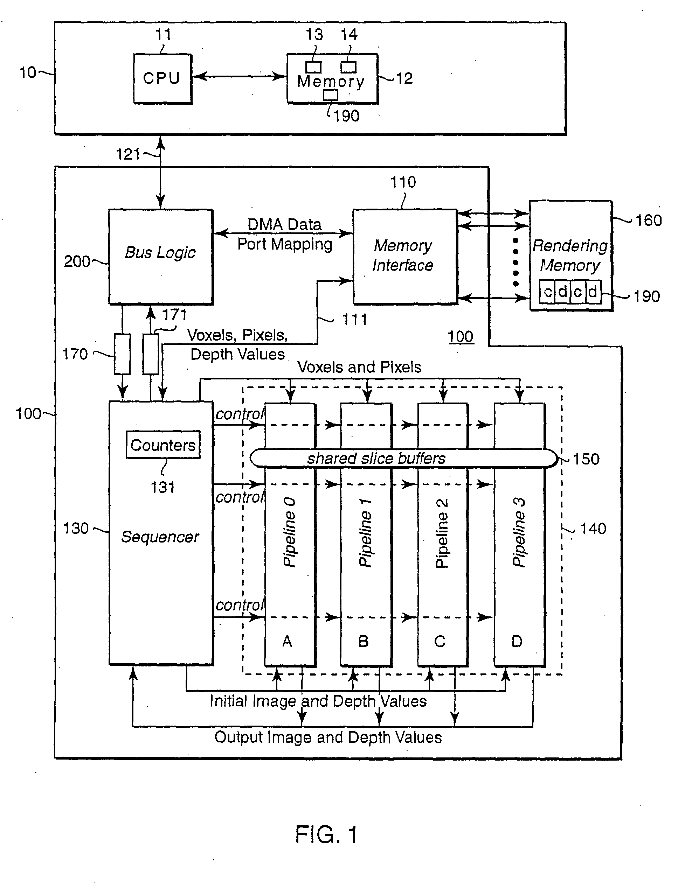

Figure 1 shows the overall organization of a volume rendering system according to our invention. The system includes a host computer 10 connected to a rendering subsystem 100 by a bus 121. The host includes a CPU 11 and a host memory 12. The host memory 12 can store graphical application software 13 and graphic drivers 14 that communicate with operating system software. The software executes in the CPU 11. The host memory can also stores rendering data, such as volume data sets, images, and various table.

The main modules of the rendering engine 100 are a memory interface 110, bus logic 200, a sequencer 130, and four parallel pipelines 140. Except for a pair of slice buffers 150, which span all four pipelines, the pipelines (A,B, C, and D) operate independently of each other. In the preferred embodiment, all of the main modules 110, 200, 130, 140, and 150 are implemented with hardware circuits on a single VLSI chip. It should be noted that this is only one example of a type of rendering engine that can use the invention. It should be noted that the rendering engine can also be a polygon rendering engine, pipelined or not, or any other type of hardware implemented rendering engine.

### Memory Interface

The memory interface 110 controls a rendering memory 160. In the preferred embodiment, the rendering memory 160 comprises eight double data rate (DDR) synchronous DRAM modules. The rendering memory provides a unified storage for all rendering data 111 directly needed for rendering graphic objects in the pipelines 140, such as volumes (voxels), polygons, input and output images (pixels), depth values, and look-up tables. As described below, the rendering memory 160 can also store command queue buffers 190 according to the invention. Alternately, the host CPU memory 12 can store command queue buffers 190. That is, any individual command queue buffer can be stored either in the rendering memory 160 or the host memory 12.

The memory interface 110 implements all memory accesses to the rendering memory 160, arbitrates the requests of the bus logic 200 and the sequencer 130, and distributes data across the subsystem 100 and the rendering memory 160. As an advantage, the high bandwidth memory accesses (reads and writes) are overlapped with rendering operations.

In the preferred embodiment, the VLSI 100 and rendering memory 160 are implemented as a single board that can be plugged into the PCI bus 121.

### Sequencer

The sequencer 130 controls the rendering engine. It determines what data to fetch from the memory, dispatches that data to the four pipelines 140, sends control information such as interpolation weights to the individual pipelines at the right time, and receives output data from rendering operations. The sequencer itself is a set of finite state machines controlled by a large number of registers. These are typically written by the bus logic 200 in response to load register commands of a particular command queue, but may also be written directly by software on the host system via PCI accesses to the bus logic. In either case, bus logic 200 writes register values to sequencer 130 via a FIFO 170. This enables the operation of bus logic 200 to be decoupled from that of the sequencer 130 and for the bus logic and sequencer to operate with different cycle times.

Internally, the sequencer 130 maintains counters 131 needed to step through sample space one section at a time, to convert sample coordinates to permuted voxel coordinates, and to generate control information needed by the stages of the four pipelines. The sequencer also provides the bus logic with status 171 on rendering operations. The bus logic, in turn, provides the host 10 with the rendering status.

### Bus Logic

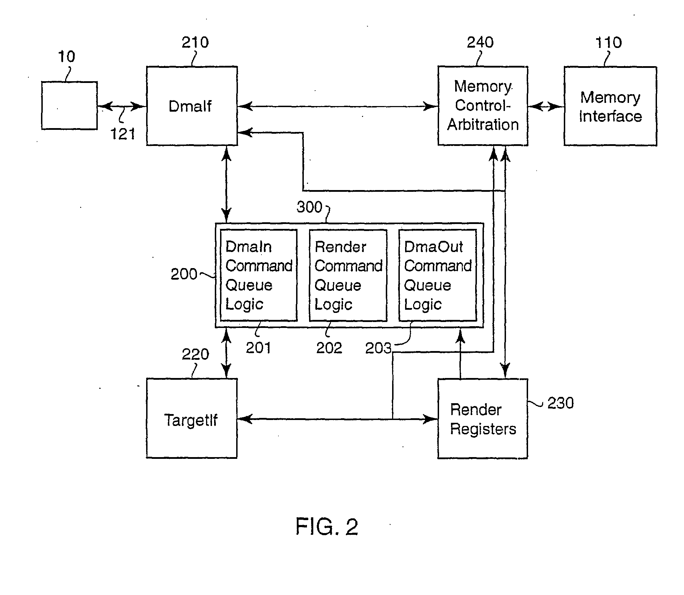

Figure 2 shows the internal structure of the bus logic 200. The bus logic 200 contains command queue logic 300 and provides an interface to the host 10 via bus 121, and to the memory interface 110 and the sequencer 130 via the FIFO 170. If the host is a personel computer (PC) or workstation, then the bus 121 can be a 64-bit, 66 MHz PCI bus 121 conforming to version 2.2 of the PCI specification.

For this purpose, the bus logic includes a DMA interface (DmaIf) 210 that controls direct memory access (DMA) operations for transfering data to (DmaIn) and from (DmaOut) the rendering memory 160 via the memory interface 110. The DMA operations are burst-mode data transfers. The bus logic acts as a PCI bus master for this purpose.

A target interface (TargetIf) 220 controls the reading and writing of rendering registers 230. These accesses are direct reads and/or writes to and from individual registers and individual locations in the memory, initiated by the host 10 or by some other device on the PCI bus.

The bus logic also includes memory control and arbitrarion logic 240, which arbitrates DMA requests and target register read/write requests. The logic 240 also converts memory access operations into commands between the bus logic 200 and the memory interface 110. The bus logic also sends register values directly to the sequencer 130 for controlling rendering operations and receives status 171 back from the sequencer 130.

Finally, the bus logic contains three identical copies of the command queue logic 300 (numbered 201, 202, and 203). The preferred embodiment supports three command queues. Typically, the logic 201-203 are dedicated to processing DMAin commands, render commands, and DMAout commands, respectively, as described below. In the preferred embodiment, the command queue ring buffers 190 are stored in the rendering memory 160 or the host memory 12. Alternatively, the buffers could be part of the command queue logic 300.

### Command Queue Logic

As shown in Figure 2, the rendering system supports three command queues 300: *DmaIn* 201, *Render* 202, and *DmaOut* 203. In a typical usage, the DmaIn command queue 201 controls the transfer of data from the host memory 12 into the rendering memory 160. The Render command queue 202 renders the rendering data 111 according user supplied parameters, including copying graphics data from place to place within rendering memory 160. The DmaOut command queue 203 controls the transfer of data from the rendering memory 160 to the host memory 12. This data can be images or partially processed rendering data. Each command queue buffer 190 can reside either in host memory 180 or in the rendering memory 160.

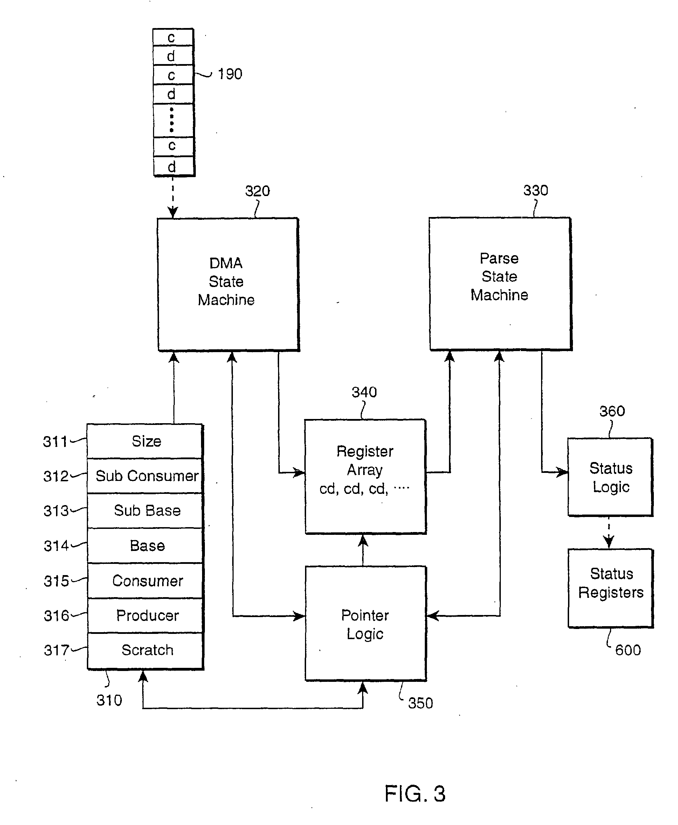

Figure 3 shows the logic 300 that implements each of the command queues 201-203. There is one copy of the command queue logic 300 for each command queue. The logic 300 includes command queue state registers 310, a DMA state machine 320, a parse state machine 330, a register array 340, pointer logic 350, and status logic 360. Each command queue logic also reports status information to a shared status register 600. Note, there is only one status registers for all three copies of the logic. The status register is one of the render registers 230.

The state registers 310 specify the state of the associated command queue, including the location of the associated command queue buffer 190 in the rendering memory 160 or the host memory 12, and the current position in the buffer. Specifically, the registers are Size 311, subConsumer 312, SubBase 313, Base 314, Consumer 315, Producer 316, and Scratch 317 registers.

The data values stored in the command queue buffers 190 control data transfers, rendering operations and allow for the synchronization of transfer and rendering commands. Therefore, the buffers store commands (operators) and data (operands) as elements *c* and *d*. Application software, or other means, writes the elements *c* and *d* sequentially to empty entries in the command queue buffers 190. Different commands c may have different amounts of data d associated with them, or in some cases no data at all.

The DMA state machine 310 reads elements from the command queue buffer 190 into local storage, i.e., register array 340, while the Parse state machine 330 reads or "consumes" the elements. If the command queue buffer 190 is empty or if a command c being processed requires synchronizing to an event that has not occurred yet, then the associated process stops and waits until more elements are written to the queue, or the event occurs.

In the preferred embodiment, each command queue buffer 190 is arranged as a linear array in either the rendering memory 160, or some external memory in the PCI address space, such as host memory 12. Commands *c* and data *d* elements are written and read by incrementally stepping through the linear array. When the end of the linear array is encountered, the stepping wraps around to continue at the beginning in a circular manner. In other words, the buffers 190 are operated as circular buffers.

The command queue state registers 310 control this process. Registers Base 314 and Size 311 describe the location and length of the associated queue. Depending upon the setting of the least significant bit of Base, the queue is either in external memory 12 or the rendering memory 160. In particular, if the least significant bit is *0*, then the queue is in the PCI address space, and if the least significant bit is *1*, then the queue is in the rendering memory 160.

The Size register 311 has a value one less than the actual number of entries in the queue, which is a power of two. The Size register can then be used as a mask with the queue pointers so that complex wrap-around address arithmetic is not required.

The Producer 316 and Consumer 315 registers are indexes into the command queue, according to the standard ring buffer model that is known in the art. In particular, the Producer 316 register points to the first free entry in the queue where new commands or data elements can be written. The Consumer 315 register points at the element currently being processed. Both the Producer and Consumer registers are masked by the Size register, so that their low order bits represent relative indexes into the memory array representing the queue and their high order bits are discarded. Because of this masking, simple arithmetic can be used for incrementing; no test for wraparound is needed.

When processing is complete for a command, the pointer logic 350 increments Consumer 315 so that it points to the next entry in the command queue. If its masked value is equal to the masked value of Producer, then the queue is empty and parsing temporarily stops until new commands are written to the queue. Otherwise, a next command *c* is read and its processing is initiated.

Application software executing on the host processor can write commands and data to the queue while previously written commands are processed. The software does so by writing commands and data into the queue starting at the entry denoted by the masked value of Producer 316. When the writing is complete, the software atomically updates Producer by the number of elements written to the queue, so that Producer points to the next empty entry in the queue.

After the last element in the command queue is processed, the next element is written at the beginning of the queue. Of course, the software must ensure that Producer never "catches up" with Consumer, else the software would overwrite commands that the Parse State Machine 330 has not yet processed.

Registers SubBase 313 and SubConsumer 312 support a command queue "subroutine" facility described below. The Scratch register 317 associated with each command queue is provided for the convenience of software. This register can hold temporary values and can be be loaded, stored, incremented, and tested with a *"sync"* command described below.

Note that Producer is updated only by software, never by the command queue logic 300, except in response to a reset of the command queue as defined below. Consumer and SubConsumer are only updated by the command queue logic, never by software. Moreover, these registers are updated atomically. Therefore, these registers may be read at any time without concern for race conditions with respect to comparisons between Producer and Consumer.

### Other Registers for use with Command Queues

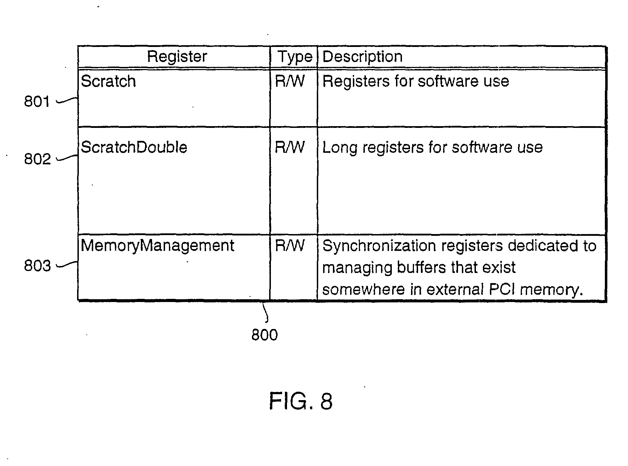

Figure 8 lists a set of scratch and temporary registers 800 for use by software in managing queues, synchronizing rendering and DMA events, and managing external memory. The registers 800 include Scratch 801, ScratchDouble 802, and Memory Management 803. Each of these registers can be be loaded, stored, and incremented by software or by hardware using command *loadReg* and *incrReg,* which are described below. In addition, the registers may be tested by the *sync* command.

These registers are particularly intended to support the management and transfer of pixel and depth arrays containing embedded polygons generated by a graphics board connected to the host processor. They are loaded and incremented atomically by command *loadReg* and *incReg,* which are described below. Therefore, command queues exchanging data and synchronizing themselves with these registers need not be concerned with race conditions between the updating and testing.

### States of Command Queues

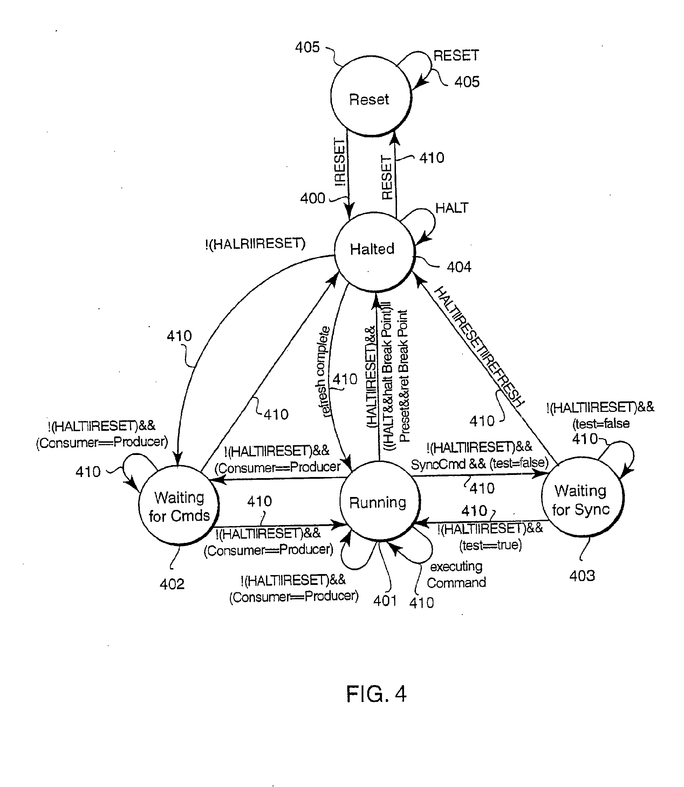

As shown in Figure 4, each command queue can be in one of five states while parsing commands: *running* 401, *waiting for commands* 402, *waiting for sync* 403, *halted* 404, or *reset* 405. State transitions are shown as directed edges 410 between the states. For example, the transitions labelled **"HALT ∥ RESET"** indicate that the transition occurs during a cycle in which either or both (∥) of the *halt* and *reset* bits of a *QueueControl* (see below) are true for that particular command queue.

In the *running* state 401, the command queue logic 300 reads commands and data from the command queue, starting at the command pointed to by *Consumer,* and parses and processes each command in turn.

In the *waiting for commands* state 402, command parsing has temporarily stopped because the masked value of Consumer has caught up with the masked value of Producer. Command parsing, i.e., the *running* state 401, resumes automatically following the update of Producer. At that time new commands are read from the queue and processed. Processing data transfer command means causing DMA or register transfer, and processing render commends means causing rendering operation in the rendering engine, e.g., the pipelines 140.

In the *waiting for sync* state 403, command parsing has temporarily stopped because a *sync* command, see below, is waiting for the value of a register to satisfy a test. Command parsing resumes automatically following the update of the register so that the test of the *sync* command is satisfied.

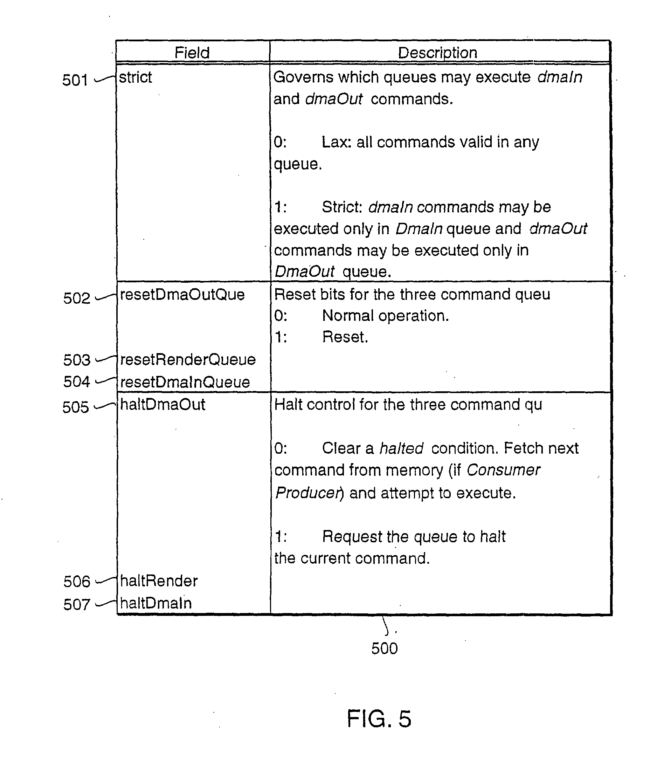

In the *halted* state 404, command parsing is stopped, regardless of the values of Producer and Consumer. The *halted* state occurs either as a result of writing to the corresponding *halt* bit of the *QueueControl* register 500, see below with respect to Figure 5, or as a result of parsing a command with the *halt* or *haltAll* bit set, see below. Parsing can only be resumed by clearing the *halt* bit in the *QueueControl* register 500.

When a command queue is in the *halted* state 404, the entire state of the command queue is contained in its register set 310. No hidden or internal state of the command queue is preserved. If the queue is not empty, then *Consumer* points to the next command to be processed. When the *halt* bit is cleared, commands are re-fetched from the buffer 190 into the local register array 340. This allows software to modify queue elements in the command queue buffer 190 while the queue is halted and ensures that the command queue logic 300 reads those modified elements into internal buffer 340 before restarting.

Finally, in the *reset* state 405, the command queue is being reset to a defined initial state. Removing the reset signals leaves the command queue in the *halted* state.

### Queue Control Register

As shown in Figure 5, a *QueueControl* register 500 controls the state of a corresponding one of the command queues. This register provides bits for resetting each of the command queues, fields for halting the command queues, and a bit for strictly controlling where DMA commands can be processed. The bits include *strict* 501, *resetDmaOutQueue* 502, *resetRenderQueue* 503, *resetDmaInQueue* 504, *haltDmaOut* 505, *haltRender 506,* and *haltDmaIn* 507.

### Resetting a Command Queue

Writing a "one" to any of the three *reset* bits 502-504 causes the corresponding command queue to enter the reset state 405. All of its registers 310 are set to zero. Resetting a command queue interrupts parsing and processing of commands in the queue.

### Halting a Command Queue

Writing a "one" to any of the three *halt* bits 505-507 causes the corresponding command queue to enter the *halted* state 404 when processing of the current command is complete. In particular, commands whose processing takes of long duration, such as DMA transfers with long scatter-gather lists or *loadReg* commands with long lists of registers will run to completion before the corresponding command queue comes to the *halted* state. This allows software to single step the queues during debug, for example.

If the queue is in the *waiting* state at the time its *halt* bit is set, then the queue immediately enters the *halted* state. If the *waiting* state was a result of the test of a *sync* command not being satisfied, then the *sync* command is interrupted and the *Consumer* pointer is set so that the *sync* will be reexecuted when the *halt* bit is cleared.

Clearing the *halt* bit causes that command queue to return to either the *executing* or *waiting* state, depending upon the values of its registers. In particular, if *SubBase* is not zero, then the command pointed to be *SubConsumer* is re-fetched and executed. If *SubBase* is zero and *Consumer* is not the same as *Producer,* then the command pointed to by *Consumer* is re-fetched and executed. If *Consumer* and *Producer* point to the same element in the command queue, then the queue is deemed to be empty and its enters the *waiting* state.

If the command pointed to by *Consumer* or *SubConsumer* is a *sync* command, then the command is re-fetched just like any other command and its test is re-evaluated. If the test is not satisfied, then the queue enters the *waiting* state again.

Command queues may also be halted by commands contained within the queues. To summarize, a command queue can be halted in any of four ways.

First, application software can set its *halt* bit in the *QueueControl* register 500 to one. The command queue will halt at the end of its current command but will not start a new command. If the current command is a *sync* and the test has not been satisfied, then the *sync* command will be aborted. The *halted* bit in *QueueStatus,* see below, indicates when the queue has actually entered the *halted* state.

Second, a command queue may have the *halt* bit set in one of its own commands. In this case, the processing of the command will complete, and the *halt* bit is written to the corresponding entry of *QueueControl,* and the command queue immediately enters the *halted* state. If the command is a *sync* command, then the *halt* bit is not written until the *sync* test is satisfied. This is useful for single-stepping through commands during debugging.

Third, some command queue may have the *haltAll* bit set in one of its commands. In that case, when the command containing the *haltAll* bit completes, ones are written to all three *halt* bits in *QueueControl.* Its own command queue will immediately enter the *halted* state, just as if it had the *halt* bit set in its command instead of *haltAll*. The other two queues behave as if software had written a one to their *halt* bits, i.e., processing of their current commands will complete before their queues enter the *halted* state, but *sync* commands waiting for unsatisfied tests will be interrupted. The *halted* bits of *QueueStatus* 600, described below, indicate when the respective command queue has actually entered the *halted* state.

Fourth, software can set the corresponding *reset* bit of *QueueControl.* In this case, the command queue halts after the *reset* bit is cleared.

### Strict and Lax Control of DMA Commands

The *strict* bit 501 of the *QueueControl* register 500 determines which command queues can process which of the DMA commands.

When *strict* is set to one, *dmaIn* commanda may be processed only from the *DmaIn* queue, and *dmaOut* commands may be processed only from the *DmaOut* queue. Any violation of this rule causes the *halt* bits of all three queues to be immediately set to one and an interrupt to be generated. The violating command is not processed, and *Consumer* or *SubConsumer* of the queue containing the violation is left pointing to that command. This enforces the typical usage of the three queues and detects errors when that usage is violated.

When *strict* is set to zero, any command can be parsed and processed in any queue. This is useful, for example, during software development when the rendering engine may be controlled with only one command queue so there is no overlapped processing. It is also useful when software divides up commands among the three queues in a manner other than the typical division of dmaIn commands, render commands, and dmaOut commands as described above.

### Command Queue Status

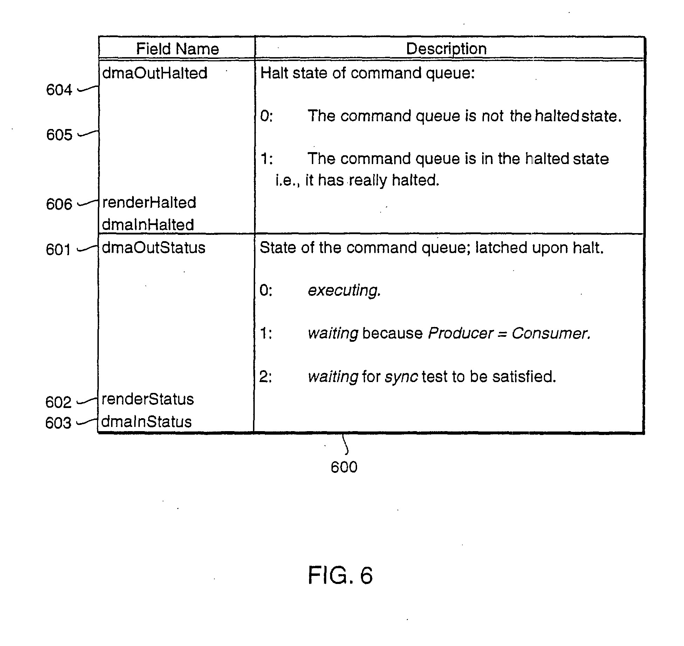

Figure 6 shows *a QueueStatus* register 600. The registers 600 are maintained by the status logic 360. This register indicates the status of the command queues and whether each has been halted. Each of the three *halted* bits 604-606 indicate that the corresponding command queue has actually entered its *halted* state 404.

The status of each command queue is continually updated in corresponding two-bit *status* fields 601-603. When the queue is not halted, these continuously update. When the queue halts, this status is latched to indicate what the command queue was doing at the time it halted. This status can be examined by software, for example during debugging.

After the queue halts, a status of *executing* means that processing a command was in progress at the time the *halt* bit was set. A status of *"waiting because Producer = Consumer"* means that no command was being processed when the *halt* bit was set because the queue was empty. A status of *"waiting for sync test to be satisfied"* means that an unsatisfied *sync* command was interrupted by the setting of the *halt* bit.

### Command Queue Commands

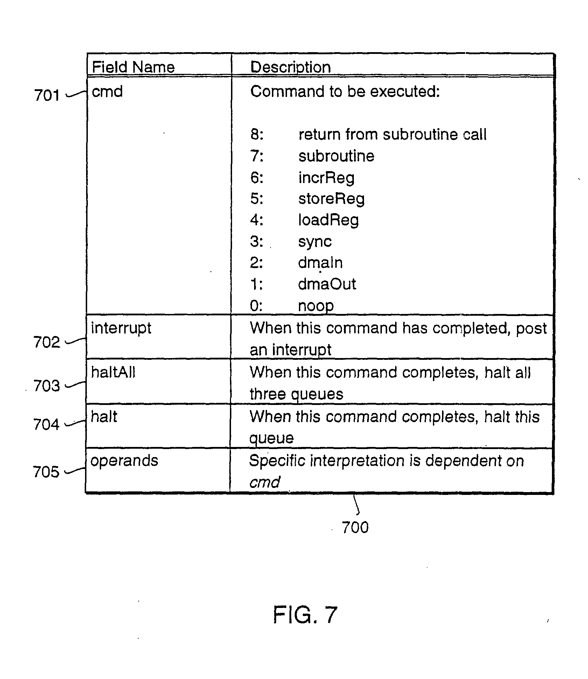

Figure 7 shows the format 700 for queue commands. A command comprises a command header *c* (operator) which can be followed followed by data (operand). Typical actions during the processing of commands are to load or store registers, test register values for synchronization purposes, and to initiate DMA transfers. To initiate a rendering operation from within a command queue, rendering registers are loaded by one or more *loadReg* commands.

Each command header contains the following fields. An operator code in the *cmd* field 701 indicating the kind of command to be processed. The operators are enumerated in the subsections below, together with the operand 705 for each operator code.

When the *interrupt* field 702 is set, an interrupt is signalled at the completion of processing this command.

When the *haltAll* field 703 is set, all three halt bits in the *QueueControl* register 500 are set to one upon the completion of the current command. This causes the current command queue to enter the *halted* state with its *Consumer* or *SubConsumer* register pointing to the next command to be parsed and processed. The other two command queues enter the *halted* state after processing of their current commands completes.

When the *halt* field 704 is set, the current command queue enters the *halted* state with its *halt* bit in *QueueControl* register is set to one as soon as the command processing is completed. Its *Consumer* or *SubConsumer* register points to the next command in its queue.

### Noop command

A *noop* command does nothing and takes one clock cycle to complete. During the *noop* command, the *interrupt, halt,* and *haltAll* bits in the command header are parsed as in any other command. This command can be used as a placeholder by the application software or to force a halt between two separate sequences of commands. The operand 705 is ignored.

### DMA commands

Two DMA commands, *dmaIn* and *dmaOut,* are provided for causing DMA transfers from within the bus logic 200. Each DMA command has a *count* operand 705 in the command header, followed by a list of the specified number of data elements within the queue. Each data element contains a *hostAddress,* a *hostAddressIncr,* and a *length.* Regardless of which DMA command is invoked, the DMA transfer represented by the *hostAddress* and *length* proceeds to completion.

Processing of a DMA command cannot be interrupted by writing a *halt* bit to the *QueueControl* register. Processing of the command completes before the queue enters the *halted* state. Processing of a DMA command is, however, interrupted when its command queue is reset. This interrupt occurs at the natural end of a single DMA transfer of *length* bytes, whether or not *count* has been exhausted.

If the *strict* bit 501 is set in the *QueueControl* register 500, then the *dmaIn* command may only be invoked from the *DmaIn* queue, and the *dmaOut* command may only be invoked from the *DmaOut* queue.

### Sync command

As an advantage of the present invention, the synchronization (*sync*) command provides a flexible mechanism for synchronizing the multiple command queues with each other and with application software. Executing a *sync* command for a particular command queue causes the register specified by the operand 705 to be compared (equal, greater than, less than, etc.) with the value in a *testValue* operand. The comparison relation is specified by the *test* operand. The *sync* command itself comprises only its command header; it is not followed by any data elements.

If the comparison is true, then the parsing of elements in the command queue continues with the next command. If the comparison is false, then the command queue is placed in the *waiting* state until the register specified by *reg* is updated to cause the comparison to become true. That is, at some later time, when software or some other command queue updates the register, the test of the *sync* command is finally satisfied. Then the command queue containing the *sync* command changes state from *waiting* to *running,* and the next command is fetched for parsing and processing.

The *sync* command is special with respect to halting. If a command queue has an outstanding unsatisfied *sync* command, i.e., a *sync* command which has been attempted but the test is not yet been satisfied, and the *halt* bit in *QueueControl* for that command queue is set to one by software or some other command queue, then the *sync* command is immediately aborted. The *Consumer* or *SubConsumer* register of that command queue is set to point to the *sync* command, as if it had never processed. Then later, when the *halt* bit in *QueueControl* is cleared, the *sync* command is re-fetched from the command buffer 190 into register array 340 and tried again. This gives application software some predictable control over *sync* during the *halted* state. From the software point of view, *sync* either succeeds or it is left in the state that it would have been if it had not yet been tried. No hidden state, such as the comparison value, is preserved in a command queue across a halt.

The *sync* command also contains a *refetch* bit that causes similar behavior. In particular, if *refetch* is set to one, then the command queue buffer data in the register array 340 will be flushed and refetched, just as if it had halted at that point. This allows software to modify the commands in the queue while the hardware is waiting for the *synch* test to be satisfied, and guarantees that the modified commands will be read into the register array 340. This is useful, for example, for debug and for situations where a "dummy" value is written into a subsequent location in the command queue, which can only be filled in with the correct value after the specified *sync* condition is met.

### Register Commands

The *storeReg, loadReg,* and *incrReg* commands enable writing, reading and incrementing the rendering engine registers. The registers' data can be transfered to and from the PCI address space. The *storeReg* command specifies a register address as its operand, followed by a 64-bit PCI address as a data element in the queue. The *loadReg* command allows loading a variable number of contiguous registers as specified by a register address and a mask in its operand, followed by a data element in the queue for each bit that is set in the mask, each data element representing a 64-bit register value. Finally, the *incReg* command contains a register address and an increment value in its operand, which it adds to the specified register.

### Subroutine and Return

The *Subroutine* and *Return* commands allow procesing of other queue commands that are not "in-line," i.e., a *"command subroutine."* The *subroutine* command causes processing of the command subroutine, and then proceeds processing commands from the queue in their normal order. A data element following the *subroutine* command header is treated as a memory address and is written to the *SubBase* register 313 of the command queue invoking the subroutine. The return address is held in the *Consumer* register 315, which points to the element in the main command queue following the *Subroutine* command and its data element. Subroutine commands are stored as a list of elements containing commands and data, just as for a command queue buffer. However, the subroutine command queue buffer is *not* a circular buffer. It is simply a linear list of commands, terminated by a *Return* command.

In the preferred embodiment, any commands may be placed in a subroutine command queue, except the subroutine command itself. That is, subroutines do not invoke other subroutines. However, in other embodiments, subroutines could invoke other subroutines, either by providing additonal on-chip *subBase* registers or by storing data in off-chip memory.

Subroutines are most typically used for DMA commands. This makes it convenient for application software to keep the access information separate from a template in the command queue buffer for certain kinds of activity. A subroutine may be interrupted when its command queue is placed in the *halted* state. When the *halt* bit for that command queue is cleared, it is noted that the *SubBase* register is not zero. The next command is fetched from the element in the subroutine command list denoted by *Sub Consumer,* rather than from the main command queue.

The *Return* command causes parsing to resume from the main command queue at the entry pointed to by *Consumer.* It clears both *SubConsumer* and *SubBase* to zero, so that there is no confusion as to where to restart command processing following a *halt*. If the halt bit of a *subroutine* command is set, then the command queue halts after the call of the subroutine but before executing the first command of the subroutine. When halted, *SubBase* points to the address of the command following the *subroutine* command, *SubConsumer* is zero, and *Consumer* points to the command to resume following the return from the subroutine. If the *halt* bit is set in a *return* command, then the command queue halts after the return from the subroutine but before proceeding with the first command following the subroutine call. In this case, *SubBase* and *SubConsumer* are cleared, and *Consumer* points to the command to be processed next.

### Conclusion

Thus, the invention provides a command queue structure that separates input and output data transfers from rendering operations, and also enables synchronization between data transfers and rendering operations. This is an advantage when the transfers and operations take a long time, that is, many clock cycles. By separately handling these activities, operations that take a long time do not need to wait for each another, except when specifically required for correct operation, e.g., delaying copying an image to system memory until rendering is complete. These synchronization delays do not require software intervention, but can be handled completely within the command queue control logic.

The command queue structure as described herein can be applied to any kind of graphics rendering engine, or any other hardware accelerator, for that matter. The invention is especially advantageous when there are a large number of rendering activities that concurrently require host processing, sub-system processing, and high bandwidth DMA transfers.

Although the invention has been described by way of examples of preferred embodiments, it is to be understood that various other adaptations and modifications can be made within the spirit and scope of the invention. Therefore, it is the object of the appended claims to cover all such variations and modifications as come within the true spirit and scope of the invention.

## Claims

1. A rendering system, comprising:
a memory storing data transfer and rendering commands in a plurality of command queues;
command queue logic for each of plurality of command queues, each command queue logic concurrently fetching, parsing and processing the data transfer and rendering commands of a corresponding command queue; and
means for synchronizing the concurrent fetching, parsing and processing of the data transfer and rendering commands while rendering graphic data.

2. The rendering system of claim 1 wherein sync commands stored in the plurality of command queues synchronize the plurality of command queues.

3. The rendering system of claim 2 wherein the sync commands are generated by a host processor connected to the rendering system.

4. The rendering system of claim 2 wherein the sync commands are generated by a rendering pipeline of the rendering system.

5. The rendering system of claim 1 wherein at least one of the command queues is stored in a host memory.

6. The rendering system of claim 1 wherein at least one of the command queues is stored in a rendering memory.

7. The rendering system of claim 1 wherein the plurality of queues are arranged as circular buffers with a plurality of elements to store the data transfer and render commands.

8. The rendering system of claim 1 wherein each command queue logic further comprises:
a DMA state machine for fetching the data transfer and render commands from the corresponding command queue; and
a parse state machine for parsing, processing and synchronizing the data transfer and render commands.

9. The rendering system of claim 1 wherein the data transfer commands are issued to a DMA interface and the rendering commands are issued to a plurality of parallel pipelines.

10. The rendering system of claim 8 wherein the parse state machine has reset, halted, running, waiting for commands, and waiting for sync states.

11. The rendering system of claim 2 further comprising:
a scratch register for storing events, and wherein the sync commands tests the scratch register for an occurrence of particular events.

12. The rendering system of claim 11 wherein parsing and processing of the data transfer and rendering commands is stopped while waiting for the occurence of the particular event.

13. The rendering system of claim 1 wherein each command queue includes a plurality of entries for storing the data transfer and rendering commands and further comprising:
a producer register for each command queue for storing a first pointer to a first entry storing a next command to be fetched; and
a consumer register for each command queue for storing a second pointer to a second entry to store a next command.

14. A rendering system, comprising:
a memory configured to store data transfer, rendering and sync commands in a plurality of command queues;
a plurality of registers configured to store events; and
command queue logic, for each of plurality of command queues, each command- queue logic for concurrently fetching, parsing and processing the data transfer and rendering commands of a corresponding command queue, and synchronizing the concurrent fetching, parsing and processing of the data transfer and rendering commands by testing for particular events stored in the plurality of registers using the sync commands while rendering data.

15. A method for rendering, comprising:
storing data transfer and rendering commands in a plurality of command queues;
concurrently fetching, parsing and processing the data transfer and rendering commands of a corresponding command queue; and
synchronizing the concurrent fetching, parsing and processing of the data transfer and rendering commands while rendering graphic data.

16. The method of claim 15 further comprising:
storing events in registers; and
testing the registers for occurences of particular events with sync commands to synchronize the concurrent fetching, parsing and processing of the data transfer and rendering commands.
